# EUROPÄISCHE PATENTSCHRIFT

(11) **EP 1 153 891 B1**
(45) Veröffentlichungstag und Bekanntmachung des Hinweises auf die Patenterteilung: **11.08.2004**
(21) Anmeldenummer: 00110029.6
(22) Anmeldetag: 12.05.2000
(51) Int. Cl.: C02F 3/06

(54) **Verfahren und Reaktor zur biologischen und/oder physikalischen Elimination unerwünschter Wasserinhaltsstoffe aus Wasser**
Process and device for biological and/or physical elimination of undesired substances from water
Procédé et dispositif pour l'élimination biologique et/ou physique des substances indésirables de l'eau

(43) Veröffentlichungstag der Anmeldung: 14.11.2001
(73) Patentinhaber: Delphin Umwelttechnik GmbH, 21079 Hamburg (DE)
(72) Erfinder: Brinke-Seifert, Stephan Dr. Ing., 20257 Hamburg (DE)
(74) Vertreter: Fleck, Thomas, Dr. Dipl.-Chem.

(56) Entgegenhaltungen:
- DE-A- 3 243 626
- DE-C- 19 622 348
- US-A- 4 379 050

## Beschreibung

Die Erfindung betrifft ein Verfahren zur biologischen und/oder physikalischen Elimination unerwünschter Wasserinhaltsstoffe aus Wasser nach dem Oberbegriff des Anspruch 1.

Ein derartiges Verfahren ist aus der DE-C1-195 12 907 bekannt. Die Sandfiltration gehört zu den etablierten Verfahren in der Wasseraufbereitung von Trinkwasser und in der Abwassertechnik, wo sie zur Elimination von Schwebstoffen als letzte Stufe von biologischen Kläranlagen dient. Das Verfahren zeichnet sich durch eine kontinuierliche Beschickung von Wasser aus. Der Reaktor wird in der Regel von oben nach unten durchflossen. Die Filtrationsleistung hängt von einer Reihe von Einflüssen wie Korngröße des Schüttmaterials, Kornform u.ä. ab. Ist der Filter durch den Rückhalt von Partikeln beladen, muß er regeneriert werden. Dies geschieht in der Regel durch eine Rückspülung. Hierzu werden Wasser- und Luft in großer Geschwindigkeit von unten nach oben durch den Reaktor geführt, so daß die durch die Filtration zurückgehaltenen Partikel ausgetragen werden. Für die Rückspülung sind Pumpen zu installieren, die aus einem Speicher das Wasser zur Rückspülung pumpen.

Innerhalb der letzten Jahre hat sich eine weitere Technologie etabliert, die auch auf Nutzung eines mit Trägermaterial gefüllten Reaktors basiert. Das Trägermaterial wird als Fläche für den Aufwuchs eines Biofilms genutzt, mittels dessen unerwünschte Wasserinhaltsstoffe biologisch aus dem Wasser entfernt werden. Auch dieses Verfahren weist Filtrationseigenschaften auf. Je nach gewählter Korngröße und Höhe des Reaktors steht die biologische Reaktion oder die Filtration im Vordergrund. Daher wird dieses Verfahren auch Biofiltration genannt. Auch die für diesen Zweck genutzten Reaktoren müssen in regelmäßigen Abständen rückgespült werden, was durch Nutzung separater Rückspülpumpen- und gebläse realisiert wird.

Für die Rückspülung von Festbetten können folgende Wasser- und Luftgeschwindigkeiten angegeben werden:

| | | |
|---|---|---|
| a) | Luftspülung zum Auflockern | v_{Luft} = 100 m/h (30s bis 60s) |
| b) | Spülung mit Luft und Wasser | v_{Luft} = 100 m/h, v_{Wasser} = 67 m/h (5-10 min) |
| c) | Spülung mit Wasser | v_{Wasser} = 67 m/h (3 min) |

Da Festbetten im Normalbetrieb mit Wasser- und Luft-Geschwindigkeiten von 5 bis 10 m/h gefahren werden, bedarf es zur Verfügungsstellung der Wasser- und Luftmengenleistung erheblicher Pumpleistung für relativ kurze Zeit. Damit verbunden sind hohe Investitionskosten für die Pumpen, Rohrleitungen und Armaturen, die nur kurzzeitig genutzt werden. Zudem müssen für die Pumpen eine erhebliche Anschlußleistung zur Verfügung gestellt werden.

Der Erfindung liegt die Aufgabe zugrunde, den Rückspülvorgang des eingangs genannten Verfahrens einfacher und wirtschaftlicher durchzuführen. Diese Aufgabe wird erfindungsgemäß daurch gelöst, daß zur aufwärts gerichteten Rückspülung der Wasserstrom und der Luftstrom in ein Teilsegment der Bodenfläche eingebracht wird. So können die durch die Betriebspumpen- und gebläse erzeugten Wasser- und Luftgeschwindigkeiten bezogen auf die Leerrohrfläche bei Beaufschlagung eines Viertels (eines Achtels) der Fläche entsprechend vervierfacht (verachtfacht) werden. Für dieses Teilsegment werden Geschwindigkeiten erreicht, die ausreichend sind um dieses Teilsegment über die Höhe des Festbettreaktors zu regenerieren. Erreicht wird die Segmentierung der Wasser- und Luftströme durch eine spezielle Bodenkonstruktion.

Das erfindungsgemäße Verfahren ist für eine Anwendung bei einem Abwasseranfall von 10 m³/d bis 100.000 m³/d geeignet, nämlich zur Filtration oder zur biologischen Restreinigung von Wässern.

Im folgenden wird die Erfindung anhand mehrerer Zeichnungen zum besseren Verständnis erläutert:

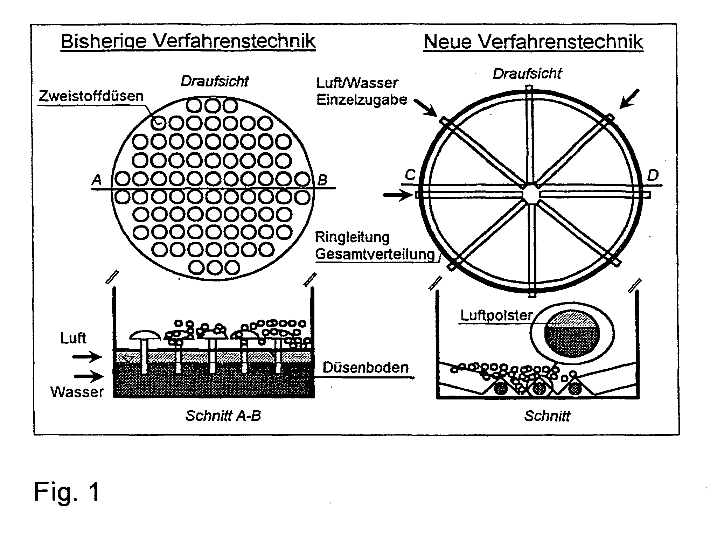

- Fig. 1: eine schematische Darstellung der dem Stand der Technik entsprechenden Bodenskonstruktion zur Verteilung von Luft und Wasser im Festbetreaktor und der erfindungsgemäß neukonstruierten Bodenkonstruktion zur segmentierten Verteilung von Luft und Wasser zur Regeneration des Festbettreaktors.

Wie aus Fig.1 ersichtlich ist, weist der Stand der Technik zur Verteilung von Luft und Wasser einen Zwischenboden auf, der mit Zweistoffdüsen bestückt ist. Unterhalb des Zwischenbodens wird Luft und Wasser eingeführt. Es bildet sich ein Luftpolster aus, daß für eine gleichmäßige Verteilung der Luft sorgt. Nach dem Füllen des Reaktors mit Trägermaterial ist es nach bisheriger Technik nicht mehr möglich die Düsen bei Defekt auszutauschen. Auch eine partielle Verteilung von Luft und Wasser ist mit dieser Konstruktion nicht möglich.

Der Zwischenboden ist bei der Neukonstruktion nicht mehr notwendig. Die Luft- und Wasserverteilung wird durch eine spezielle Rohrkonstruktion übernommen, die direkt auf dem Boden des Reaktors installiert wird, jederzeit zugänglich für evtl. Reparaturen (Verschleiß) ist, sowie einen besonderen Betrieb hinsichtlich des partiellen Eintrag von Luft und Wasser erlaubt. Die Fig. 1 verdeutlicht die Neukonstruktion im Detail. Die neue Konstruktion besteht aus zentrisch installierten Rohren, die durch auf den Reaktorboden installierte Drainagerohre vom Trägermaterial getrennt sind. Die eingeführten Rohre besitzen an der Oberseite kleine Löcher zur Verteilung der Luft. An der Unterseite sind größere Löcher zur Verteilung des Wassers vorgesehen. Es bildet sich bei der Zufuhr von Luft und Wasser, in Abhängigkeit der Größe der Löcher zur Luftverteilung innerhalb der Rohre, ein Luftpolster aus.

Je nach Bedarf kann durch diese Konstruktion ein Teilsegment mit dem gesamten Wasser- und Luftstrom beaufschlagt werden. Diese Teilbeaufschlagung führt bezogen auf die Teilfläche zu hohen Wasser- und Luftgeschwindigkeiten, die zur Rückspülung genutzt werden können. Durch diese neue Rückspültechnologie Ist es möglich mit wesentlich niedrigerem Energieeinsatz im Vergleich zum bisherigen System ein Festbett rückzuspülen.

Eine weitere Möglichkeit besteht darin zentrisch angeordnete Rohre zur Belüftung getrennt von einer Wasserverteilung vorzunehmen. Die Rohre zur Belüftung könnten beispielsweise aus Belüfterelementen bestehen, wie sie zur feinblasigen Belüftung in der Abwassertechnik Anwendung finden. Die Wasserverteilung könnte über Drainagerohre erfolgen, in denen auch die Belüfterrohre installiert sind und die die Verteilung von Wasser und Luft von dem Filtermaterial trennt.

### Beispiel

Als Beispiel wird der Betrieb des Reaktors nachgeschaltet zu einer biologischen Kläranlage ausgeführt. Der Reaktor wird mit Abwasser einer vorgeschalteten Kklärstufe gespeist und dient der Nitrifikation der zugeführten Wässer.
Zulauf zum Festbettreaktor Q_{w} = 230 m³/h
Gewählte Oberflächenbeschickung des Reaktors: q_{A} = 10 m³/(m²·h)
Notwendige Grundfläche des Filters:
   A_{Fi} = Q_{RW} /q_{A}
   A_{Fi} = 230/10
   A_{Fi} = 23 m²

Der Filter weist eine Schütthöhe von 6m auf und wird aufwärts durchströmt. Der Reaktor wird mit 230 m³/h betrieben. Die für die Nitrifikation benötigte Luftleistung beträgt 15 m/h, das entspricht einem Strom von 345 m³/h. Der Reaktor wird alle 24 Stunden regeneriert. Bei der herkömmlichen Technologie sind für eine ausreichende Spülung auf die Gesamtfläche bezogen eine Wassergeschwindigkeit von 40 m/h, das entspricht einer Pumpleistung von 920 m³/h, und eine Luftgeschwindigkeit von 60 m/h, das entspricht einer Gebläseleistung von 1380 m³/h, notwendig, um den Filter zu regenieren. Die hierfür niotwendigen Aggregate werden je 24 Stunden für eine Stunde benötigt.

Durch die erfindungsgemäße Rückspültechnologie kann auf diese Aggregate verzichtet werden und die gleichen auf die Fläche bezogenen Geschwindigkeiten können durch Beaufschlagung von Teilsegmenten erreicht werden. Dabei wird durch Schaltung von Ventilen nur ein Teil der zentrisch eingeführten Rohre mit Wasser durchströmt.

## Patentansprüche

1. Verfahren zur biologischen und physikalischen Elimination unerwünschter Wasserinhaltsstoffe aus Wasser mittels eines gefluteten, sequentiell oder kontinuierlich betriebenen Reaktors mit einem Kornhaufen-Trägermaterial, das je nach eingestelltem Verfahren mit Wasser und Gas, z.B. Luft beaufschlagt wird, wobei der Reaktor gelegentlich oder in regelmäßigen Abständen rückgespült wird und wobei der Reaktor eine Bodenkonstruktion aufweist, die denselben auf seine Grundfläche bezogen segmentweise mit Wasser und Luft zur Rückspülung beaufschlagt, **dadurch gekennzeichnet, daß** das Verfahren in einem Biofilm-Festbettreaktor mit einer kreisförmigen Grundfläche durchgeführt wird, die Bodenkonstruktion aus zentrisch angeordneten Rohren besteht, die zur Verteilung von Wasser und Luft über die Fläche des Reaktors dienen und zur Rückspülung des Reaktors einzeln oder in Gruppen mit Wasser und/oder Luft beaufschlagt werden können, und daß die Zufuhr von Luft und Wasser durch ein für Wasser und Luft gemeinsam genutztes Rohr oder separat durch mehrere Lanzen, die jede für sich nur Wasser oder Luft transportieren, erfolgt.

2. Verfahren nach Anspruch 1, **dadurch gekennzeichnet, daß** das Rückspülwasser in die vorgeschaltete Anlage zurückgeführt wird.

3. Verfahren nach einem der Ansprüche 1 oder 2, **dadurch gekennzeichnet, daß** das Rückspülwasser in einen separaten Auffangbehälter zurückgeführt wird.

4. Verfahren nach einem der Ansprüche 1 bis 3, **dadurch gekennzeichnet, daß** in den Reaktor mittels Blasenbelüftung Sauerstoff eingetragen wird.

5. Verfahren nach einem der Ansprüche 1 bis 4, **dadurch gekennzeichnet, daß** in den Reaktor mittels blasenfreier Belüftung Sauerstoff eingetragen wird.

6. Verfahren nach einem der Ansprüche 1 bis 5, **dadurch gekennzeichnet, daß** in den Zulauf des Reaktors Chemikalien, wie z.B. H-Donatoren zur Denitrifikation, oder Flokkungshilfsmittel zur Verbesserung der Filtrationsleistung zugegeben werden.

7. Verfahren nach einem der Ansprüche 1 bis 6, **dadurch gekennzeichnet, daß** der Reaktor mit inerten Trägermaterial oder einer Mischung aus inerten Trägermaterial mit z.B. Aktivkohle und/oder Ionenaustauscher betrieben wird.

8. Reaktor zur biologischen und physikalischen Elimination unerwünschter Wasserinhaltsstoffe aus Wasser, welcher Reaktor ein Kornhaufen-Trägermaterial enthält, das je nach eingestelltem Verfahren mit Wasser und Gas, z.B. Luft beaufschlagt wird, **dadurch gekennzeichnet, daß** der Reaktor ein Biofilm-Festbettreaktor mit einer kreisförmigen Grundfläche ist und daß auf dem Reaktorboden zentrisch angeordnete Rohre installiert sind, die zur Rückspülung des Reaktors einzeln mit einem Wasser- und/oder Luftstrom beaufschlagbar sind.

## Claims

1. Process for the biological and physical elimination of undesired constituents from water by means of a flooded, sequentially or continuously operated reactor with a particle heap supporting material which, as a function of the process used is subject to the action of water and gas, e.g. air, the reactor occasionally or regularly being backwashed and in which the reactor has a base structure, which in segmentally related manner supplies its base surface with water and air for backwashing purposes, **characterized in that** the process is performed in a biofilm, fixed-bed reactor having a circular base surface, the base structure comprises centrally positioned pipes, which are used for distributing water and air over the reactor surface and which for backwashing the reactor can individually or groupwise be supplied with water and/or air and that the supply of air and water takes place by means of a pipe jointly used for water and air or separately through several lances, each of which only transports water or air.

2. Process according to claim 1, **characterized in that** the backwashing water is returned to the upstream installation.

3. Process according to one of the claims 1 or 2, **characterized in that** the backwashing water is returned to a separate collecting container.

4. Process according to one of the claims 1 to 3, **characterized in that** oxygen is introduced into the reactor by bubble aeration.

5. Process according to one of the claims 1 to 4, **characterized in that** oxygen is introduced into the reactor by bubble-free aeration.

6. Process according to one of the claims 1 to 5, **characterized in that** to the reactor feed are added chemicals, such as e.g. H-donors for denitrification, or flocculation aids for improving the filtration capacity.

7. Process according to one of the claims 1 to 6, **characterized in that** the reactor is operated with inert supporting material or a mixture of inert supporting material with e.g. activated carbon and/or ion exchanger.

8. Reactor for the biological and physical elimination of undesired constituents from water, said reactor containing a particle heap supporting material, which as a function of the process used is supplied with water and gas, e.g. air, **characterized in that** the reactor is a biofilm fixed-bed reactor with a circular base surface and that on the reactor base are centrally positioned pipes which, for backwashing the reactor, can be individually supplied with a water and/or air flow.

## Revendications

1. Procédé destiné à l'élimination biologique et physique de substances indésirables contenues dans de l'eau au moyen d'un réacteur rempli d'eau, fonctionnant de façon séquentielle ou continue, comportant un matériau de support constitué de granulés empilés, qui est alimenté en fonction du procédé réglé avec de l'eau et du gaz, par exemple de l'air, le réacteur étant soumis occasionnellement ou à intervalles réguliers à un rétrolavage, et le réacteur comportant une construction de fond qui, en ce qui concerne sa surface de base, alimente ce dernier par segments avec de l'eau et de l'air pour le rétrolavage, **caractérisé en ce que** le procédé est mis en oeuvre dans un réacteur à lit fixe à film biologique comportant une surface de base circulaire, **en ce que** la construction de fond est constituée de tubes disposés de façon centrée, qui servent à la répartition d'eau et d'air sur la surface du réacteur, et qui peuvent être alimentés individuellement ou en groupes avec de l'eau et/ou de l'air pour le rétrolavage du réacteur, et **en ce que** l'amenée d'air et d'eau est effectuée par un tube utilisé en commun pour de l'eau et de l'air ou séparément par l'intermédiaire de plusieurs lances, qui ne transportent chacune en soi que de l'eau ou de l'air.

2. Procédé selon la revendication 1, **caractérisé en ce que** l'eau de rétrolavage est recyclée dans l'installation placée en amont.

3. Procédé selon la revendication 1 ou 2, **caractérisé en ce que** l'eau de rétrolavage est recyclée dans un réservoir collecteur séparé.

4. Procédé selon l'une quelconque des revendications 1 à 3, **caractérisé en ce que** de l'oxygène est introduit dans le réacteur au moyen d'une aération par bullage.

5. Procédé selon l'une quelconque des revendications 1 à 4, **caractérisé en ce que** de l'oxygène est introduit dans le réacteur au moyen d'une aération sans bullage.

6. Procédé selon l'une quelconque des revendications 1 à 5, **caractérisé en ce que** des produits chimiques sont ajoutés dans l'entrée du réacteur, tels que par exemple des donneurs de H pour la dénitrification, ou des additifs de floculation pour l'amélioration de la puissance de filtration.

7. Procédé selon l'une quelconque des revendications 1 à 6, **caractérisé en ce que** le réacteur fonctionne avec du matériau de support inerte ou avec un mélange de matériau de support inerte et de charbon actif et/ou d'échangeurs d'ions, par exemple.

8. Réacteur destiné à l'élimination biologique et physique de substances indésirables contenues dans de l'eau, lequel réacteur comporte un matériau de support constitué de granulés empilés, qui est alimenté en fonction du procédé réglé avec de l'eau et du gaz, par exemple de l'air, **caractérisé en ce que** le réacteur est un réacteur à lit fixe à film biologique comportant une surface de base circulaire, et **en ce que** des tubes disposés de façon centrée sont installés sur le fond du réacteur qui, pour le rétrolavage du réacteur, peuvent être alimentés individuellement ou en groupes avec un courant d'eau et/ou d'air.
